# EUROPEAN PATENT SPECIFICATION

(11) **EP 0 480 070 B1**
(45) Date of publication and mention of the grant of the patent: **10.07.1996**
(21) Application number: 91908788.2
(22) Date of filing: 24.04.1991
(51) Int. Cl.: C04B 28/04, C04B 38/08

(54) **HEAT INSULATING MATERIAL AND STRUCTURE MADE THEREFROM**
WÄRMEDÄMPFENDES MATERIAL UND DARAUS HERGESTELLTE STRUKTUR
MATERIAU THERMOISOLANT ET STRUCTURE FABRIQUEE A PARTIR DE CE MATERIAU

(30) Priority: 25.04.1990 JP 109546/90; 25.04.1990 JP 109547/90
(43) Date of publication of application: 15.04.1992
(73) Proprietor: TAKENAKA CORPORATION, Osaka-shi, Osaka-fu 541 (JP)
(72) Inventor: SHINOZAKI, Yukuo, 13-21, 5-chome, Toyozumi, Chiba-ken 277 (JP)
(74) Representative: Kern, Wolfgang, Dipl.-Ing.
(86) International application number: JP9100549
(87) International publication number: WO9116278

(56) References cited:
- EP-A- 0 484 544
- JP-A- 1 160 882

## Description

This invention relates to a heat insulator and a structure using the heat insulator.

A heat insulator for buildings which heretofore has been known includes a heat insulator molded board such as Styrofoam (a registered trademark) to be integrally applied by being driven in the form to serve for a fill-up concrete block, too and an expanded urethane to be applied by being sprayed onto a concrete surface on a job site.

An organic heat insulator such as the above expanded urethane and Styrofoam to be applied on a job site has a very low thermal conductivity of 0.02 to 0.03 (kcal/mhr°C), exhibiting a remarkable heat-insulating property. But it has a disadvantage that it is easily flammable because it is organic.

In view of legal fire preventing regulations and strength, a flame retardant material such as a plaster hoard is put on the organic heat insulator to form a base on which facing is required to be applied. This requires many construction steps to make a building fireproofed, resulting in a disadvantage requiring much labor.

As a heat insulator free from the above disadvantage, an expanded mortar, pearlite mortar and other lightweight mortar are used as an inorganic heat insulator.

Such an inorganic heat insulator is hard to burn. But it has a thermal conductivity of 0.2 to 0.3 (kcal/mhr°C) which is very large as compared with that (0.02 to 0.03 kcal/mhr°C) of an organic heat insulator. Therefore, it has a disadvantage that its heat-insulating performance is inferior to that of the organic heat insulator.

Thus, it is difficult to obtain a desired heat-insulating performance. And to obtain the desired performance, a very thick insulator is required.

Heretofore, as the inorganic heat insulator for a building, there has been used a heat-insulating material such as an expanded mortar and pearlite mortar in which cement is mainly used in the form of matrix.

Such an expanded mortar and pearlite mortar are applied by a wet process such as spraying and troweling or a dry process in the form of a heat insulator molded board.

In view of legal fire preventing regulations and strength, a flame retardant material such as a plaster board is put on the organic heat insulator to form a base on which facing is required to be applied. This requires many construction steps to make a building fireproofed, resulting in a disadvantage requiring much labor.

In JP-A-1-160 882 a heat-insulator is described which comprises organic and inorganic microballoons according to one preferred embodiment. This known heat-insulator has a specific gravity in absolute dry condition of 0.41 and a heat conductivity of 0.077.

It is an object of the present invention to provide a heat insulator which has a better heat insulating performance, a good fire retardance and a suitable water absorbing performance.

This object is achieved by a heat-insulator comprising the features of claim 1.

An air-dried specific gravity of 0.31 is achieved by sufficient large air pockets formed in the mortar. Since these air pockets are large enough a very light heat-insulator is obtained, said air pockets affecting the water absorbing performance in an advantageous manner. As a result, the heat-insulator according to the present invention is in a position to absorb moisture to a greater extend if compared to the known heat insulator identified above when the room humidity increases. As a further result, the heat insulator according to the present invention may release more moisture when the room humidity lowers than the conventional heat insulator.

This heat insulator can be applied by a dry process in which it is used in the form of a molded board or a wet process. It has a heat-insulating performance which is similar to that of an organic heat insulator, fire retardance which is identical to that of a conventional inorganic heat insulator, and a higher strength than a conventional heat insulator.

The heat insulator of Claim 1 consists of 100 parts by weight of cement, 3 to 50 parts by weight of synthetic resin emulsion in solid content equivalency, 1 to 20 parts by weight of organic microballoon, 0.3 to 5 parts by weight of carbon fibre and 10 to 200 parts by weight of inorganic microballoon.

Reasons of adding 3 to 50 parts by weight of synthetic resin emulsion in solid content equivalency to 100 parts by weight of cement are that adding less than 3 parts by weight deteriorates a bond performance and adding more than 50 parts by weight deteriorates a fire resistant performance, adversely increasing costs.

Reasons of adding 1 to 20 parts by weight of organic microballoon to 100 parts by weight of cement are that adding less than 1 part by weight deteriorates a heat-insulating performance and adding more than 20 parts by weight deteriorates a fire resistant performance and strength, adversely increasing costs.

Reasons of adding 0.3 to 5 parts by weight of carbon fibre to 100 parts by weight of cement are that adding less than 0.3 part by weight lowers a matrix reinforcing effect and an effect of preventing cracks due to contraction and adding more than 5 parts by weight results in bulky fiber inducing poor workability, while increasing costs but not increasing a reinforcing effect so much.

Reasons of adding 10 to 200 parts by weight of inorganic microballoon to 100 parts by weight of cement are that adding less than 10 parts by weight increases amounts of other expensive materials increasing costs and not useful in enhancing fire resistant performance and adding more than 200 parts by weight results in a brittle product. In view of improved fire resistant performance, strength and costs, the inorganic microballoon is desirably added in 10 to 100 parts by weight to 100 parts by weight of cement.

The heat insulator of Claim 1 is prepared by mixing and kneading cement and inorganic microballoon with for example synthetic resin emulsion, carbon fibre, organic microballoon, and if necessary a mixture in the form of paste prepared by mixing and kneading water-soluble resin, antifoamer, and mildewproofing agent in advance.

The structure of Claim 2 is formed by forming a heat-insulating layer on a structure body by a wet process in which a heat insulator prepared by mixing 3 to 50 parts by weight of synthetic resin emulsion in solid content equivalency, 1 to 20 parts by weight of organic microballoon, 0.3 to 5 parts by weight of carbon fibre and 10 to 200 parts by weight of inorganic microballoon with 100 parts by weight of cement is applied.

The wet process means to form a heat-insulating layer by adhering a viscous fluid heat insulator onto the surface of a structure body by spraying or troweling.

The structure of Claim 2 has a seamless heat-insulating layer formed on the structure body by applying the heat insulator of Claim 1 by the wet process. Therefore, heat conduction through the structure is effectively prevented and fire retardance is improved.

Formation of the heat-insulating layer by the wet process is effected by adhering a viscous fluidity or a heat insulator onto the surface of concrete to a certain thickness on a job site by spraying or troweling.

In the structure having the above heat-insulating layer formed, the heat-insulating layer has a small moisture permeation coefficient but an appropriate water absorption. When a room humidity increases, the heat-insulating layer absorbs moisture to collect therein, and when the room humidity lowers, the heat-insulating layer releases moisture, thereby automatically adjusting the room humidity.

The present invention will be described in detail with reference to the embodiments of the drawings.
Fig. 1 is a vertical section showing one embodiment of the structure using the heat insulator of this invention;
Fig. 2 is a vertical section showing another structure using the heat insulator of this invention; and
Fig. 3 to Fig. 5 are transverse cross sections showing other structures using the heat insulator of this invention.

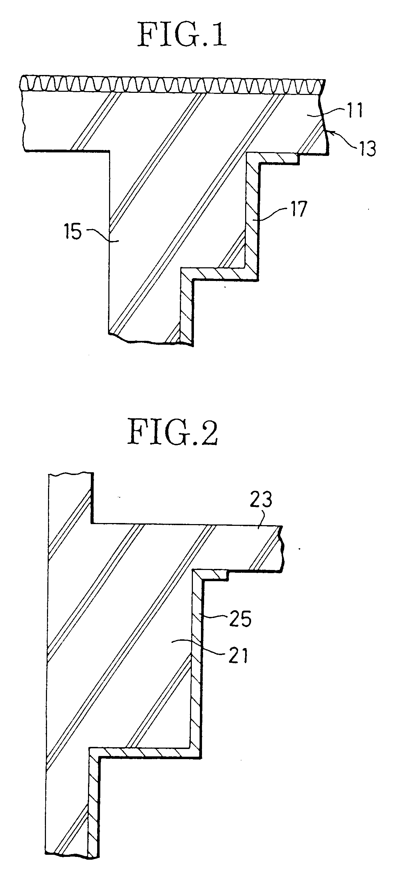

Fig. 1 shows one embodiment of the structure of this invention, in which reference numeral 11 shows a roof slab of a structure body 13.

This roof slab 11 is supported by a beam 15 of the structure body 13.

The inner face of the beam 15 and the lower face of the roof slab 11 have a heat-insulating layer 17 formed. The heat-insulating layer 17 formed on the lower face of the roof slab 11 has a thickness of about 50 to 60 mm for example from the inner side of the beam 15. This is to prevent the formation of heat bridge or to prevent conduction of heat from outside through a roof.

The heat-insulating layer 17 is formed by adhering a viscous fluid heat insulator to the inner face of the beam 15 or the lower face of the roof slab 11.

This heat insulator consists of cement, synthetic resin emulsion, carbon fibre, organic microballoon, water, water-soluble resin or thickening agent, anti-sagging agent, antifoamer, mildewproofing agent, and inorganic microballoon.

The cement is a high-early-strength Portland cement.

The synthetic resin emulsion is for example acrylic type, vinyl acetate type, synthetic rubber type, vinylidene chloride type, polyvinyl chloride type or a mixture thereof.

The carbon fibre have a fibre length of about 6 mm for example.

The organic microballoon has a particle diameter of 10 to 100 micrometers for example and a specific gravity of 0.04 or less. Inorganic microballoon has a particle diameter of 5 to 200 micrometers for example and a specific gravity of 0.3 to 0.7.

The thickening agent is a water-soluble polymer compound such as methyl cellulose, polyvinyl alcohol, and hydroxyethyl cellulose.

The above heat insulator is produced by mixing and kneading 100 parts by weight of powder with 28 parts by weight of synthetic resin emulsion (6.3 parts by weight in solid content equivalency), 2.6 parts by weight of carbon fibre, 24 parts by weight of organic microballoon, 0.4 part by weight of water-soluble resin, 137 parts by weight of water, and 100 parts by weight of a semi-liquid mixture consisting of a small amount of antifoamer and mildewproofing agent.

The powder consists of 100 parts by weight of a high-early-strength Portland cement and 16 parts by weight of inorganic microballoon.

This heat insulator thus produced has properties as shown in Table 1.

Specifically, it has a thermal conductivity of 0.06 (kcal/mhr°C), a true specific gravity of 0.54, an air-dried specific gravity of 0.31, a bending strength of 12.8 (kgf/cm²), a compressive strength of 14.7 (kgf/cm²), a bond strength of 6.2 (kgf/cm²), a moisture permeation coefficient of 0.315 (g/m²hmmHg), and water absorption of 31.4(%).

The structure constructed as above is made by applying the viscous fluid heat insulator onto the surface of a structure body 13 by spraying, troweling or gap-filling according to the wet process, thereby forming the heat-insulating layer 17 to a thickness of 10 to 15 mm for example.

The structure constructed as above has the seamless heat-insulating layer 17 formed by applying the heat insulator which is prepared by mixing cement, synthetic resin emulsion, organic microballoon, carbon fibre, water, water-soluble resin, inorganic microballoon, a small amount of thickening agent, antifoamer and mildewproofing agent, onto the structure body 13 by the wet process, so that it can effectively prevent the thermal conduction inside and outside the structure and improve fire retardance. The heat-insulating layer 17 formed on the structure body 13 has a high heat-insulating performance, good adherability to the structure body 13, a high strength and fire retardance. Therefore, the heat-insulating layer 17 itself can be used as a finished surface or used as a base on which decorative finishing is applied by directly coating, spraying, cloth hanging, tiling, etc. The heat-insulating layer 17 can be easily applied to any part having whatever shape, reduce stages of execution of works, secure a broad effective area (space) for accommodation, and extensively lower labor and costs.

Further, since the heat-insulating performance can be improved, occurrence of dew condensation can be thoroughly prevented.

The heat insulator made as above has a thermal conductivity of 0.06 (kcal/mhr°C) which is not very larger than that (0.02 to 0.03 kcal/mhr°C) of an organic heat insulator. Thus it can have substantially the same heat-insulating performance as the organic heat insulator. This is because the above heat insulator contains organic and inorganic microballoons, forming air pockets in the mortar. And because of the air pockets formed in the mortar, a true specific gravity is 0.54 and an air-dried specific gravity is 0.31, thus forming a very light heat insulator.

This heat insulator is an inorganic heat insulator containing a large amount of inorganic materials, so that fire retardance can be remarkably improved as compared with the organic heat insulator.

The heat insulator contains synthetic resin emulsion and carbon fibre in the mortar, providing a strong internal bonding. Therefore, the heat insulator of this invention has a compressive strength of 14.7 kgf/cm² and a bending strength of 12.8 kgf/cm², while a conventional rigid urethane foam has a compressive strength of 1.4 to 2.0 kgf/cm² and polystyrene foam 2.5 to 3.0 kgf/cm². Thus the strength can be improved extensively.

And since the synthetic resin emulsion is contained, the heat insulator has a bond strength of 6.2 kgf/cm² against the concrete surface, capable of enhancing the integrity of the heat insulator with the concrete surface and capable of surely preventing the heat insulator from peeling. Therefore, the heat insulator can be subject to the wet process and easily applied to the ceiling, buildings with many outside and reentrant angles in case of including beams, and cylindrical buildings. These execution of works are difficult to complete by conventional methods including the spraying of expanded urethane, boarding, and a dry process using heat-insulating boards.

Since the heat-insulating performance, fire retardance and strength of the heat insulator can be improved, it is not required that in view of legal fire preventing regulations and strength, a flame retardant material such as a plaster board is put on a heat insulator to form a base on which facing is applied. And stages of execution of works to make a building fireproofed can be extensively reduced. And since a seamless application is allowed, labor and costs can be reduced extensively with the improvement of heat-insulating performance.

The heat insulator may be a breathable heat insulator to effect automatic adjustment of the room humidity.

Specifically, the heat insulator has a low moisture permeation coefficient of 0.315 (g/m²hmmHg) and a water absorption of 31.4(%) giving a suitable water absorbing performance. When the room humidity increases, the heat-insulating layer 17 absorbs moisture and collects in the layer 17 and when the room humidity lowers, the insulating layer 17 releases moisture, thereby automatically adjusting the room humidity.

The right column of the aforementioned table contains Comparative Example to show the properties of a heat insulator which is prepared by mixing and kneading 100 parts by weight of a high-early-strength Portland cement with 62 parts by weight of synthetic resin emulsion (45% in solid content density)(27.9 parts by weight of solid content equivalency), 2.6 parts by weight of carbon fibre, 10.4 parts by weight of organic microballoon, 125 parts by weight of water, 100 parts by weight of a semi-liquid mixture consisting of a small amount of thickening agent, antifoamer and mildewproofing agent.

The properties of the heat insulator include a thermal conductivity of 0.05 (kcal/mhr°C), a true specific gravity of 0.52, an air-dried specific gravity of 0.30, a bending strength of 14.1 (kgf/cm²), a compressive strength of 16.5 (kgf/cm²), a bond strength of 6.8 (kgf/cm²), a moisture permeation coefficient of 0.127 (g/m²hmmHg), and a water absorption of 20.5 (%).

When the Comparative Example is compared with the present embodiment, the Comparative Example not containing inorganic microballoon has a smaller thermal conductivity than the present embodiment. Since the synthetic resin emulsion content is increased, it is seen that the bending strength and compressive strength are improved and the bond strength is also improved.

As an example of a conventional heat insulator using cement as matrix, such as expanded mortar and pearlite mortar, a commercially available expanded heat-insulating mortar has a thermal conductivity of 0.09 to 0.12 (kcal/mhr°C), a compressive strength of 3 to 5 (kgf/cm²) and a bond strength to a mortar board of 1.1 (kgf/cm²). When compared with the above, it is clear that the insulator of this invention is superior in strength and heat-insulating performance.

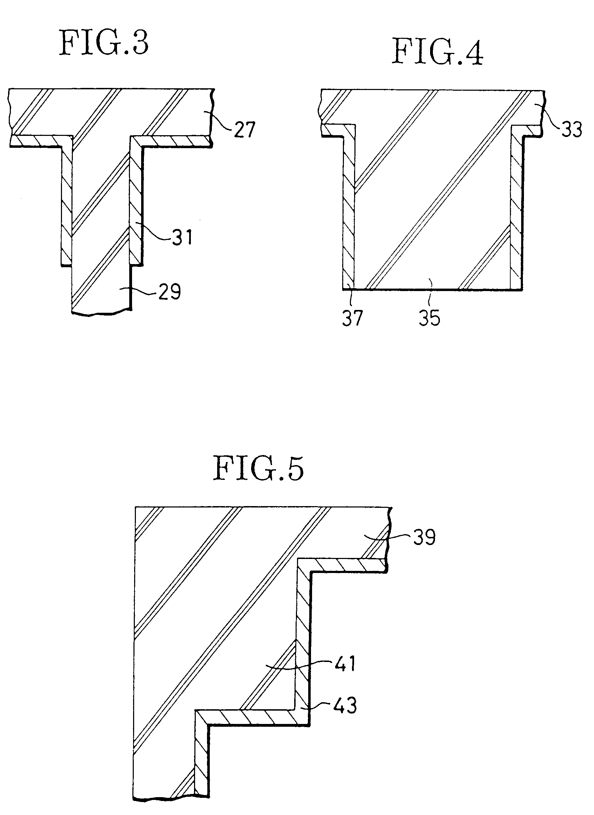

In the above embodiment, the heat insulator of this invention was applied to the structure body 13 shown in Fig. 1 by the wet process. But this invention is not limited to the above embodiment. As shown in Fig. 2, a heat-insulating layer 25 may be formed on the inner face of a beam 21 and the lower face of floor slab 23; as shown in Fig. 3, a heat-insulating layer 31 may be formed on the inner face of an outer wall 27 and the both faces of a partition wall 29; as shown in Fig. 4, a heat-insulating layer 37 may be formed on the inner face of an outer wall 33 and the both faces of a column 35; and as shown in Fig. 5, a heat-insulating layer 43 may be formed on the inner face of an outer wall 39 and a column 41.

To 100 parts by weight of cement, the materials such as synthetic resin emulsion, organic microballoon, carbon fibre, and inorganic microballoon can be added in variable amounts in the ranges of 3 to 50 parts by weight (in solid content equivalency), 1 to 20 parts by weight, 0.3 to 5 parts by weight, and 10 to 200 parts by weight respectively, to provide substantially the same effect as the above embodiment. Varying the amount of each material can modify strength, specific gravity, heat-insulating performance and fire resistant performance, capable of preparing a heat insulator provided with desired heat-insulating performance, fire resistant performance and strength.

In the above embodiment, the heat-insulating layer 17 was formed on the inner face of the structure body 13, but this invention is not limited to the above embodiment. Forming the heat-insulating layer on the outer face of the structure body also results in obtaining substantially the same effect as the above embodiment.

In the above embodiment, a small amount of thickening agent, antifoamer and mildewproofing agent was mixed into the heat insulator, but this invention is not limited to the above embodiment. Without mixing the above thickening agent, antifoamer and mildewproofing agent or with the addition of other materials if required, substantially the same effect as the above embodiment can be attained.

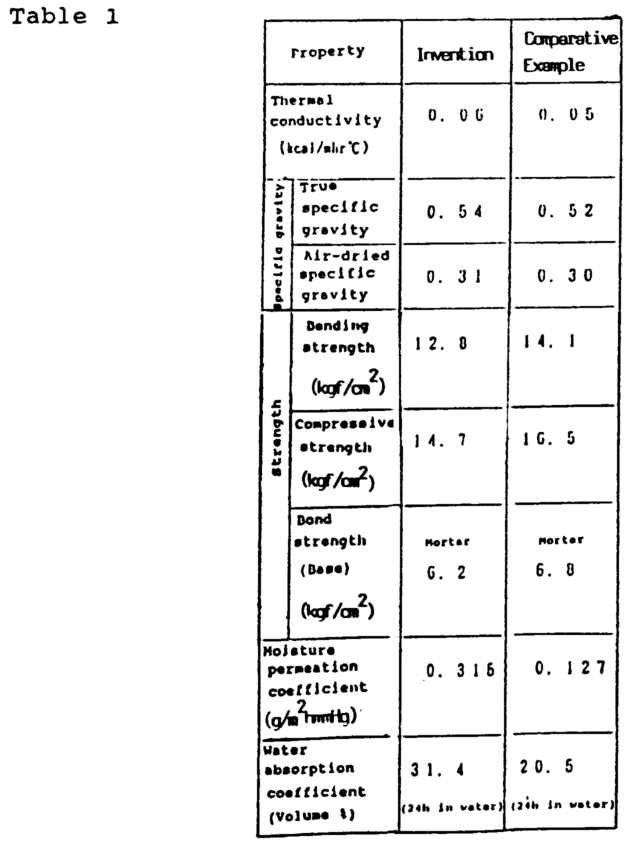

The heat insulator of Claim 1 has 3 to 50 parts by weight of synthetic resin emulsion in solid content equivalency, 1 to 20 parts by weight of organic microballoon, 0.3 to 5 parts by weight of carbon fibre, and 10 to 200 parts by weight of inorganic microballoon mixed with 100 parts by weight of cement. Therefore, it can be subjected to the wet process and have extensively improved fire retardance and heat-insulating performance.

The heat insulator has synthetic resin emulsion and carbon fibre contained in the mortar, providing a strong internal bonding. And the strength such as compressive strength and bending strength can be improved in addition to the crack preventing effect.

Since the synthetic resin emulsion is contained, the bonding strength of the heat insulator to the concrete surface can be improved, and the wet process can be used.

Because the above heat insulator contains organic and inorganic microballoons, air pockets are formed in the mortar. And the thermal conductivity can be lowered and the heat-insulating performance can be improved.

This heat insulator is an inorganic heat insulator containing a large amount of inorganic materials, so that fire retardance can be improved.

In the structure of Claim 2, a seamless heat-insulating layer is formed by forming a heat insulator on a structure body by a wet process in which the heat insulator prepared by mixing 3 to 50 parts by weight of synthetic resin emulsion in solid content equivalency, 1 to 20 parts by weight of organic microballoon, 0.3 to 5 parts by weight of carbon fibre and 10 to 200 parts by weight of inorganic microballoon with 100 parts by weight of cement is applied. Therefore, it can effectively prevent the thermal conduction inside and outside the structure and improve fire retardance. The heat-insulating layer formed on the structure body has a high heat-insulating performance, good adherability to the structure body, a high strength and fire retardance. Therefore, the heat-insulating layer itself can be used as a finished surface or used as a base on which decorative finishing is applied by directly coating, spraying, cloth hanging, tiling, etc. Thus, the stages of execution of works for making a building to have a fire-insulating structure can be largely reduced. In comparison with a conventional heat-insulating structure, an effective space can be made bigger, extensively lowering labor and costs.

## Claims

1. A heat insulator
- consisting of a mixture of
3 - 50 parts by weight of a synthetic resin emulsion in solid content equivalency
1 - 20 parts by weight of organic microballoon
0.3 - 5 parts by weight of carbon fibre
10 - 200 parts by weight of inorganic microballoon
100 parts by weight of cement, and
- having a thermal conductivity of 0.06 kcal/mh °C, an air-dried specific gravity of 0.31, a moisture permeation coefficient of 0.315 g/m² hmmHg and a water absorption coefficient of 31.4 vol.-% such that the heat insulator absorbs moisture when the room humidity increases and releases moisture when the room humidity lowers.

2. Structure **characterized by** forming a heat-insulating layer on a structure body by wet-application of a heat-insulator according to claim 1.

## Patentansprüche

1. Wärmeisolator,
― bestehend aus einem Gemisch aus
3 bis 50 Gew.-Anteilen einer Kunstharzemulsion im Feststoffgehaltäquivalent
1 bis 20 Gew.-Anteilen organische Mikrokügelchen
0,3 bis 5 Gew.-Anteilen Kohlenstoffaser
10 bis 200 Gew.-Anteilen anorganische Mikrokügelchen
100 Gew.-Anteilen Zement und
― mit einer Wärmeleitfähigkeit von 0,06 kcal/mh°C, einem luftgetrockneten spezifischen Gewicht von 0,31, einem Feuchtigkeitpermeationskoeffizienten von 0,315 g/m²hmmHg und einem Wasserabsorptionskoeffizienten von 31,4 Vol-%, so daß der Wärmeisolator Feuchtigkeit absorbiert, wenn die Raumfeuchtigkeit ansteigt, und Feuchtigkeit abgibt, wenn sich die Raumfeuchtigkeit verringert.

2. Konstruktion **gekennzeichnet durch** Ausbilden einer wärmeisolierenden Schicht auf einem Konstruktionskörper durch Naßaufbringung eines Wärmeisolators gemäß Anspruch 1.

## Revendications

1. Matériau thermo-isolant
- constitué d'un mélange de :
3 à 50 parties en poids d'une émulsion de résine synthétique en équivalent de teneur en solides,
1 à 20 parties en poids de microballons organiques,
0,3 à 5 parties en poids de fibres de carbone,
10 à 200 parties en poids de microballons minéraux, et
100 parties en poids de ciment, et
- ayant une conductivité de 0,06 kcal/mh°C, une densité, séché à l'air, de 0,31, un coefficient de perméation à l'humidité de 0,315 g/m²h mmHg et un coefficient d'absorption d'eau de 31,4 % en volume de telle sorte que le matériau thermo-isolant absorbe de l'humidité lorsque l'humidité de la pièce augmente et dégage de l'humidité lorsque l'humidité de la pièce diminue.

2. Structure caractérisée par la formation d'une couche thermo-isolante sur un corps structurel par application à l'état humide d'un matériau thermo-isolant selon la revendication 1.
